# EUROPEAN PATENT SPECIFICATION

(11) **EP 4 270 437 B1**
(45) Date of publication and mention of the grant of the patent: **20.05.2026**
(21) Application number: 23169869.7
(22) Date of filing: 25.04.2023
(51) Int. Cl.: H01H 47/00, H01H 50/14, H01H 50/04, H02H 7/10

(54) **CONVERTER AND RELAY**
WANDLER UND RELAIS
CONVERTISSEUR ET RELAIS

(30) Priority: 29.04.2022 CN 202221055524 U
(43) Date of publication of application: 01.11.2023
(73) Proprietor: Huawei Digital Power Technologies Co., Ltd., Shenzhen, 518043 (CN)
(72) Inventor: LIU, Baoqi, Shenzhen, 518043 (CN); GAO, Yongbing, Shenzhen, 518043 (CN); ZHU, Junwei, Shenzhen, 518043 (CN); TANG, Zhuo, Shenzhen, 518043 (CN); YU, Bo, Shenzhen, 518043 (CN)
(74) Representative: Isarpatent

(56) References cited:
- WO-A1-2014/041568
- CN-A- 108 281 327
- JP-A- H0 212 725
- US-A- 2 564 246
- US-B2- 10 361 051
- US-B2- 11 120 960

## Description

### TECHNICAL FIELD

This disclosure relates to the field of power system technologies, and in particular, the invention relates to a converter and a relay.

### BACKGROUND

In the new energy industry, as a key device of a power system, a converter needs to exchange energy with a grid. To meet a safety requirement, a relay for electric isolation needs to be disposed on an alternating current side of the converter to ensure that the converter can be reliably disconnected from the grid when a fault occurs, to avoid fault spreading.

Only one stage of switch is usually designed inside a conventional relay. To ensure reliable disconnection from the grid when a fault occurs, usually, for each phase, two independent relays need to be connected in series to meet a safety requirement. In this case, a three-phase system needs six relays, and each relay needs two pins for transmitting electric energy. Therefore, a conventional converter has a relatively large quantity of relays and a relatively large quantity of pins thereof, resulting in relatively high costs, a relatively large size, and a relatively large loop loss of the converter.
WO 2014/041568 A1 discloses a converter according to the preamble of claim 1 and a relay according to the preamble of claim 4 designed for the safe disconnection of two subsequent units.
US 1 036 1051 A1 relates to the operation and configuration of switching devices.

### SUMMARY

The object of the present invention is to provide a converter and a relay, to reduce costs, a size, and a loop loss of the converter. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this application provides a converter, including a conversion circuit and a relay. The relay includes a first switch apparatus, a relay part, and a second switch apparatus. The first switch apparatus includes a first static contact. a first power pin, a first electromagnet, and a first moving contact. The first static contact is fastened to the first power pin, and the first power pin is electrically connected to the conversion circuit. The first electromagnet is configured to generate magnetic attraction for the first moving contact, to drive the first moving contact to be in contact with the first static contact. The first moving contact can be separated from the first static contact after the magnetic attraction disappears. The second switch apparatus includes a second static contact, a second power pin, a second electromagnet, and a second moving contact. The second static contact is fastened to the second power pin. The second electromagnet is configured to generate magnetic attraction for the second moving contact, to drive the second moving contact to be in contact with the second static contact. The second moving contact can be separated from the second static contact after the magnetic attraction disappears. When the first moving contact is in contact with the first static contact and the second moving contact is in contact with the second static contact, the relay part is electrically connected to both the first moving contact and the second moving contact.

In this solution, the conversion circuit is configured to complete conversion between a direct current and an alternating current, and the conversion circuit may be connected between a power supply apparatus and the relay. Electric energy obtained after the conversion circuit performs conversion may be transmitted to a grid/load by using the relay. The relay has an electric isolation function. The first switch apparatus and the second switch apparatus are connected in series by using the relay part. The first power pin may be exposed, and the first power pin may be welded to a circuit board, to be electrically connected to the conversion circuit. The first static contact is connected to the first power pin through fastening, and the first static contact and the first power pin may be integrally connected. When being powered on, the first electromagnet generates magnetic attraction for the first moving contact, so that the first moving contact moves and is in contact with the first static contact. After the first electromagnet is powered off, the first moving contact may be separated from the first static contact under driving of an elastic force of an elastic piece (for example, a spring). The second power pin may be exposed, and the second power pin may be welded to the circuit board, to be electrically connected to the grid/load. The second static contact is connected to the second power pin through fastening, and the second static contact and the second power pin may be integrally connected. When being powered on, the second electromagnet generates magnetic attraction for the second moving contact, so that the second moving contact moves and is in contact with the second static contact. After the second electromagnet is powered off, the second moving contact may be separated from the second static contact under driving of an elastic force of an elastic piece (for example, a spring). When the first moving contact is in contact with the first static contact and the second moving contact is in contact with the second static contact, that is, when both the first switch apparatus and the second switch apparatus are turned on, the relay part is electrically connected to both the first moving contact and the second moving contact, so that the first power pin is connected to the second power pin by using the relay part. Therefore, the power supply apparatus, the conversion circuit, the relay, and the grid/load form a loop.

The relay in this solution is a composite relay. The relay has two stages of switch apparatuses that are independently controlled, and each stage of switch apparatus has only one power pin. For a single-phase system, only four power pins are needed. For a three-phase three-wire system, only six power pins are needed. It can be learned that because of a relatively small quantity of power pins and a relatively small quantity of relays, costs of the converter are relatively low and a size of the converter is relatively small. In addition, because a quantity of power pins is reduced, a contact loss and emitted heat can be reduced.

In an implementation of the first aspect according to the invention, the relay part is a rigid part disposed through fastening. The first switch apparatus includes a third static contact, and the third static contact is fastened to the relay part. The second switch apparatus includes a fourth static contact, and the fourth static contact is fastened to the relay part. The first switch apparatus includes two first moving contacts, and the two first moving contacts are electrically connected. The first electromagnet is configured to generate magnetic attraction for the two first moving contacts, to drive the two first moving contacts to be respectively in contact with the first static contact and the third static contact. The two first moving contacts can be respectively separated from the first static contact and the third static contact after the magnetic attraction disappears. The second switch apparatus includes two second moving contacts, and the two second moving contacts are electrically connected. The second electromagnet is configured to generate magnetic attraction for the two second moving contacts, to drive the two second moving contacts to be respectively in contact with the second static contact and the fourth static contact. The two second moving contacts can be respectively separated from the second static contact and the fourth static contact after the magnetic attraction disappears. When the two first moving contacts are respectively in contact with the first static contact and the third static contact and the two second moving contacts are respectively in contact with the second static contact and the fourth static contact, the relay part is electrically connected to the two first moving contacts and the two second moving contacts.

In this solution, the relay part is a rigid part that is not prone to deform, and a structure of the relay part may be relatively simple. Compared with the power pin, the relay part has a smaller size. The relay part can conduct electricity. The third static contact and the fourth static contact may be spaced apart on the relay part. The two first moving contacts may be spaced apart, and the two first moving contacts may be simultaneously driven to move. The two second moving contacts may be spaced apart, and the two second moving contacts may be simultaneously driven to move. When the two first moving contacts are respectively in contact with the first static contact and the third static contact and the two second moving contacts are respectively in contact with the second static contact and the fourth static contact, that is, when both the first switch apparatus and the second switch apparatus are turned on, the first power pin is connected to the second power pin by using the relay part. Therefore, the power supply apparatus, the conversion circuit, the relay, and the grid/load form a loop.

In this solution, the relay part is designed as a rigid part disposed through fastening, and two static contacts are disposed on the relay part, so that two stages of switch apparatuses can be connected in series. Because a conventional solution of using a circuit board to connect two stages of switches in series is replaced with the relay part, a circuit layout can be optimized and costs can be reduced.

In an implementation of the first aspect, the relay part includes a metal piece, and both the third static contact and the fourth static contact are fastened to the metal piece. In this solution, the metal piece has a simple structure, so that a spatial layout area can be greatly reduced, thereby reducing costs.

In an implementation of the first aspect not claimed, the relay part is a deformable part, and the relay part can deform when the first moving contact moves and/or the second moving contact moves; and the relay part is electrically connected to both the first moving contact and the second moving contact. In this solution, the relay part is soft and prone to deform, and the relay part can deform with movement of the first moving contact and/or movement of the second moving contact. The relay part is always electrically connected to the first moving contact and the second moving contact. Because the deformable relay part is designed, the relay needs only the first moving contact, the first static contact, the second moving contact, and the second static contact, without needing other contacts, so that a contact loss can be further reduced. In addition, the deformable relay part can adapt to movement of the moving contact.

In an implementation of the first aspect not claimed, the first switch apparatus includes a first armature, and the first moving contact is fastened to the first armature. The second switch apparatus includes a second armature, and the second moving contact is fastened to the second armature. The relay part is connected to the first armature and the second armature. The first electromagnet is configured to generate magnetic attraction for the first armature, so that the first armature drives the first moving contact to move and enables the first moving contact to be in contact with the first static contact. The first armature can drive, after the magnetic attraction disappears, the first moving contact to be separated from the first static contact. The second electromagnet is configured to generate magnetic attraction for the second armature, so that the second armature drives the second moving contact to move and to be in contact with the second static contact. The second armature can drive, after the magnetic attraction disappears, the second moving contact to be separated from the second static contact.

In this solution, the deformable relay part is connected between the first armature and the second armature. When the first armature and the second armature move, the relay part deforms. In this solution, a design that the relay part moves with the moving contact can be reliably implemented.

In an implementation of the first aspect not claimed, the relay part includes a soft connection wire, and the soft connection wire connects the first armature and the second armature. The soft connection wire is a soft and deformable wire, such as a copper wire. The soft connection wire can well adapt to movement of the moving contact, and can also reliably transmit electric energy.

In an implementation of the first aspect, the relay includes a sampling pin, the sampling pin is fastened to the relay part, and the sampling pin is configured to lead out an intermediate potential signal between the first switch apparatus and the second switch apparatus. The sampling pin may be exposed, to facilitate collection of the intermediate potential signal on the sampling pin. The intermediate potential signal is detected, so that working statuses of the first switch apparatus and the second switch apparatus can be obtained. Alternatively, the intermediate potential signal may be detected to implement another purpose.

According to a second aspect according to the invention, this application provides a relay, including a first switch apparatus, a relay part, and a second switch apparatus. The first switch apparatus includes a first static contact, a first power pin, a first electromagnet, and a first moving contact. The first static contact is fastened to the first power pin. The first electromagnet is configured to generate magnetic attraction for the first moving contact, to drive the first moving contact to be in contact with the first static contact. The first moving contact can be separated from the first static contact after the magnetic attraction disappears. The second switch apparatus includes a second static contact, a second power pin, a second electromagnet, and a second moving contact. The second static contact is fastened to the second power pin. The second electromagnet is configured to generate magnetic attraction for the second moving contact, to drive the second moving contact to be in contact with the second static contact. The second moving contact can be separated from the second static contact after the magnetic attraction disappears. The relay part is located between the first power pin and the second power pin. When the first moving contact is in contact with the first static contact and the second moving contact is in contact with the second static contact, the relay part is electrically connected to both the first moving contact and the second moving contact.

In this solution, the first switch apparatus and the second switch apparatus are connected in series by using the relay part. The first power pin may be exposed, and the first power pin may be welded to a circuit board, to be electrically connected to the conversion circuit. The first static contact is connected to the first power pin through fastening, and the first static contact and the first power pin may be integrally connected. When being powered on, the first electromagnet generates magnetic attraction for the first moving contact, so that the first moving contact moves and is in contact with the first static contact. After the first electromagnet is powered off, the first moving contact may be separated from the first static contact under driving of an elastic force of an elastic piece (for example, a spring). The second power pin may be exposed, and the second power pin may be welded to the circuit board, to be electrically connected to a grid/load. The second static contact is connected to the second power pin through fastening, and the second static contact and the second power pin may be integrally connected. When being powered on, the second electromagnet generates magnetic attraction for the second moving contact, so that the second moving contact moves and is in contact with the second static contact. After the second electromagnet is powered off, the second moving contact may be separated from the second static contact under driving of an elastic force of an elastic piece (for example, a spring). When the first moving contact is in contact with the first static contact and the second moving contact is in contact with the second static contact, that is, when both the first switch apparatus and the second switch apparatus are turned on, the relay part is electrically connected to both the first moving contact and the second moving contact, so that the first power pin is connected to the second power pin by using the relay part. Therefore, a power supply apparatus, the conversion circuit, the relay, and the grid/load form a loop.

The relay in this solution is a composite relay. The relay has two stages of switch apparatuses that are independently controlled, and each stage of switch apparatus has only one power pin. For a single-phase system, only four power pins are needed. For a three-phase three-wire system, only six power pins are needed. It can be learned that because of a relatively small quantity of power pins and a relatively small quantity of relays, costs of a converter are relatively low and a size of the converter is relatively small. In addition, because a quantity of power pins is reduced, a contact loss and emitted heat can be reduced.

In an implementation of the second aspect according to the invention, the relay part is a rigid part disposed through fastening. The first switch apparatus includes a third static contact, and the third static contact is fastened to the relay part. The second switch apparatus includes a fourth static contact, and the fourth static contact is fastened to the relay part. The first switch apparatus includes two first moving contacts, and the two first moving contacts are electrically connected. The first electromagnet is configured to generate magnetic attraction for the two first moving contacts, to drive the two first moving contacts to be respectively in contact with the first static contact and the third static contact. The two first moving contacts can be respectively separated from the first static contact and the third static contact after the magnetic attraction disappears. The second switch apparatus includes two second moving contacts, and the two second moving contacts are electrically connected. The second electromagnet is configured to generate magnetic attraction for the two second moving contacts, to drive the two second moving contacts to be respectively in contact with the second static contact and the fourth static contact. The two second moving contacts can be respectively separated from the second static contact and the fourth static contact after the magnetic attraction disappears. When the two first moving contacts are respectively in contact with the first static contact and the third static contact and the two second moving contacts are respectively in contact with the second static contact and the fourth static contact, the relay part is electrically connected to the two first moving contacts and the two second moving contacts.

In this solution, the relay part is a rigid part that is not prone to deform, and a structure of the relay part may be relatively simple. Compared with the power pin, the relay part has a smaller size. The relay part can conduct electricity. The third static contact and the fourth static contact may be spaced apart on the relay part. The two first moving contacts may be spaced apart, and the two first moving contacts may be simultaneously driven to move. The two second moving contacts may be spaced apart, and the two second moving contacts may be simultaneously driven to move. When the two first moving contacts are respectively in contact with the first static contact and the third static contact and the two second moving contacts are respectively in contact with the second static contact and the fourth static contact, that is, when both the first switch apparatus and the second switch apparatus are turned on, the first power pin is connected to the second power pin by using the relay part. Therefore, the power supply apparatus, the conversion circuit, the relay, and the grid/load form a loop.

In this solution, the relay part is designed as a rigid part disposed through fastening, and two static contacts are disposed on the relay part, so that two stages of switch apparatuses can be connected in series. Because a conventional solution of using a circuit board to connect two stages of switches in series is replaced with the relay part, a circuit layout can be optimized and costs can be reduced.

In an implementation of the second aspect, the relay part includes a metal piece, and both the third static contact and the fourth static contact are fastened to the metal piece. In this solution, the metal piece has a simple structure, so that a spatial layout area can be greatly reduced, thereby reducing costs.

In an implementation of the second aspect not claimed, the relay part is a deformable part, the relay part can deform when the first moving contact moves and/or the second moving contact moves; and the relay part is electrically connected to both the first moving contact and the second moving contact. In this solution, the relay part is soft and prone to deform, and the relay part can deform with movement of the first moving contact and/or movement of the second moving contact. The relay part is always electrically connected to the first moving contact and the second moving contact. Because the deformable relay part is designed, the relay needs only the first moving contact, the first static contact, the second moving contact, and the second static contact, without needing other contacts, so that a contact loss can be further reduced. In addition, the deformable relay part can adapt to movement of the moving contact.

In an implementation of the second aspect not claimed, the first switch apparatus includes a first armature, and the first moving contact is fastened to the first armature. The second switch apparatus includes a second armature, and the second moving contact is fastened to the second armature. The relay part is connected to the first armature and the second armature. The first electromagnet is configured to generate magnetic attraction for the first armature, so that the first armature drives the first moving contact to move and enables the first moving contact to be in contact with the first static contact. The first armature can drive, after the magnetic attraction disappears, the first moving contact to be separated from the first static contact. The second electromagnet is configured to generate magnetic attraction for the second armature, so that the second armature drives the second moving contact to move and to be in contact with the second static contact. The second armature can drive, after the magnetic attraction disappears, the second moving contact to be separated from the second static contact.

In this solution, the deformable relay part is connected between the first armature and the second armature. When the first armature and the second armature move, the relay part deforms. In this solution, a design that the relay part moves with the moving contact can be reliably implemented.

In an implementation of the second aspect not claimed, the relay part includes a soft connection wire, and the soft connection wire connects the first armature and the second armature. The soft connection wire is a soft and deformable wire, such as a copper wire. The soft connection wire can well adapt to movement of the moving contact, and can also reliably transmit electric energy.

In an implementation of the second aspect, the relay includes a sampling pin, the sampling pin is fastened to the relay part, and the sampling pin is configured to lead out an intermediate potential signal between the first switch apparatus and the second switch apparatus. The sampling pin may be exposed, to facilitate collection of the intermediate potential signal on the sampling pin. The intermediate potential signal is detected, so that working statuses of the first switch apparatus and the second switch apparatus can be obtained. Alternatively, the intermediate potential signal may be detected to implement another purpose.

### BRIEF DESCRIPTION OF DRAWINGS

FIG. 1 is a schematic diagram of a framework structure of a power system according to Embodiment 1 of this application;
FIG. 2 is a schematic diagram of another framework structure of a power system according to Embodiment 1 of this application;
FIG. 3 is a schematic diagram of a framework structure of a relay according to Embodiment 1 of this application;
FIG. 4 is a schematic diagram of a framework structure of a relay according to Embodiment 1 of this application;
FIG. 5 is a schematic diagram of a series architecture of two relays in a conventional converter;
FIG. 6 is a schematic diagram of a framework structure of a relay according to Embodiment 2 of this application; and
FIG. 7 is a schematic diagram of a framework structure of a relay according to Embodiment 2 of this application.
In the following description, features which in the above summary of the invention have been marked as "not claimed" are also hereinafter, when they are described and explained with reference to the drawings, to be understood as "not claimed" or "not part of the invention"

### DESCRIPTION OF EMBODIMENTS

First, second, and the like and various numbers in embodiments of this application are merely used for differentiation for ease of description, but are not intended to limit the protection scope of this application. The term "and/or" in this specification describes only an association relationship between associated objects and indicates that three relationships may exist. For example, A and/or B may indicate the following three cases: Only A exists, both A and B exist, and only B exists.

### Embodiment 1

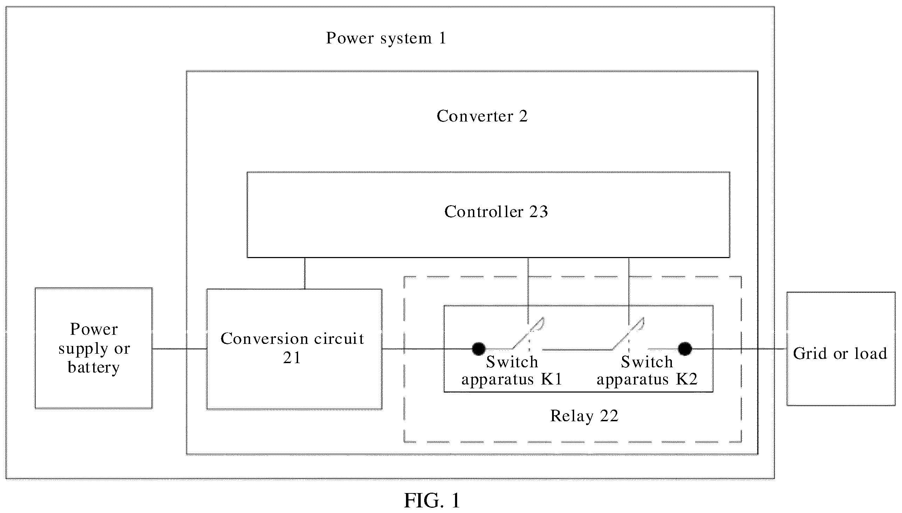

FIG. 1 shows a schematic framework structure of a power system 1 according to Embodiment 1. As shown in FIG. 1, the power system 1 may include a power supply or battery (denoted as a power supply/battery below), and may further include a converter 2. One side of the converter 2 is connected to the power supply or battery, and the other side is connected to a grid or load (denoted as a grid/load below).

The power supply is configured to unidirectionally output electric energy. The power supply may be an apparatus that provides electric energy (a power supply in a narrow sense), or may include the apparatus that provides electric energy and a converter. The power supply may be, for example, a direct current source, such as a photovoltaic module (a photovoltaic panel). In this case, the power system 1 may be a photovoltaic power generation system.

The battery can output electric energy, and can also receive and store electric energy, in other words, energy exchange of the battery is bidirectional. In this case, in the power system 1, power can be supplied to the grid/load, and the grid can also charge the battery.

In this embodiment, the power supply and the battery may be collectively referred to as a power supply apparatus.

As shown in FIG. 1, the converter 2 may include a conversion circuit 21, a relay 22, and a controller 23. One side of the conversion circuit 21 is connected to the power supply or battery, and the other side is connected to the relay 22. The relay 22 is connected to the grid/load. The controller 23 is electrically connected to both the conversion circuit 21 and the relay 22, to control the conversion circuit 21 and the relay 22 to work.

The conversion circuit 21 may be configured to complete conversion between a direct current and an alternating current, that is, the conversion circuit 21 may convert a direct current into an alternating current (for example, a direct current side of the conversion circuit 21 is connected to a direct current source, and an alternating current side of the conversion circuit 21 is connected to the relay 22), or may convert an alternating current into a direct current. A circuit topology of the conversion circuit 21 is not specifically limited in Embodiment 1. For example, the conversion circuit 21 may be of a single-inverter topology, or may be of a bidirectional conversion topology. The conversion circuit 21 may be of a two-level topology, or may be of a three-level topology or a multi-level topology. The conversion circuit 21 may be of a single-phase topology, or may be of a three-phase topology. The conversion circuit 21 may be of an isolation topology, or may be of a non-isolation topology.

As shown in FIG. 1, the relay 22 is a composite relay. The relay 22 may include two stages of switches connected in series: a switch apparatus K1 and a switch apparatus K2. A detailed structure and a working principle of the relay 22 continue to be described below.

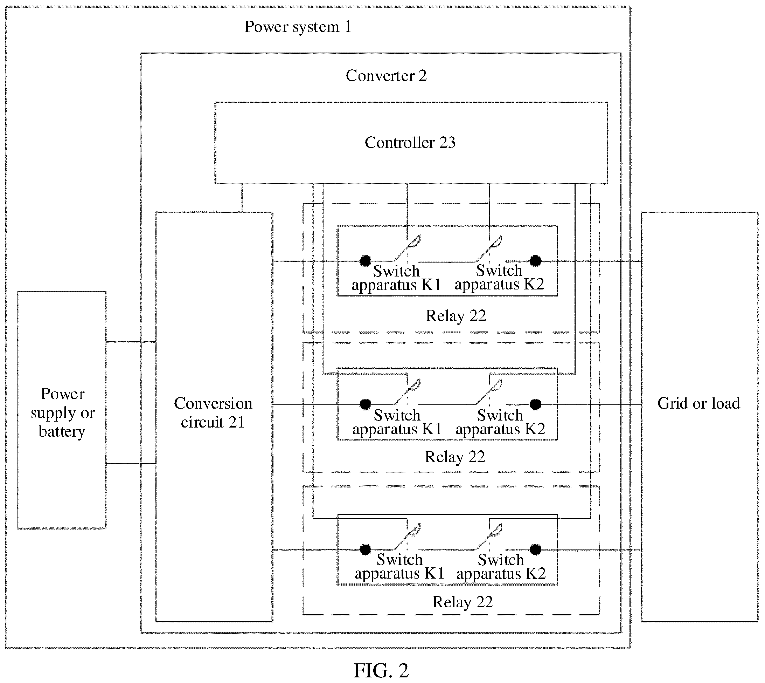

As shown in FIG. 2, the power system 1 may be a three-phase three-wire system. Each phase wire of the conversion circuit 21 is connected to one relay 22, three phase wires are connected to three relays 22, and all the three relays 22 are connected to the grid/load. The controller 23 is electrically connected to each relay 22. In another embodiment, the power system 1 may be alternatively another three-phase system, for example, a three-phase four-wire system, where one relay 22 is disposed on each phase wire and one relay 22 is disposed on a center wire. Alternatively, the power system 1 may be a single-phase system, where one relay 22 is disposed on each of a live wire and a zero wire. Alternatively, a quantity of phases of the power system is not limited in this embodiment. The following describes in detail the detailed structure and the working principle of the relay 22.

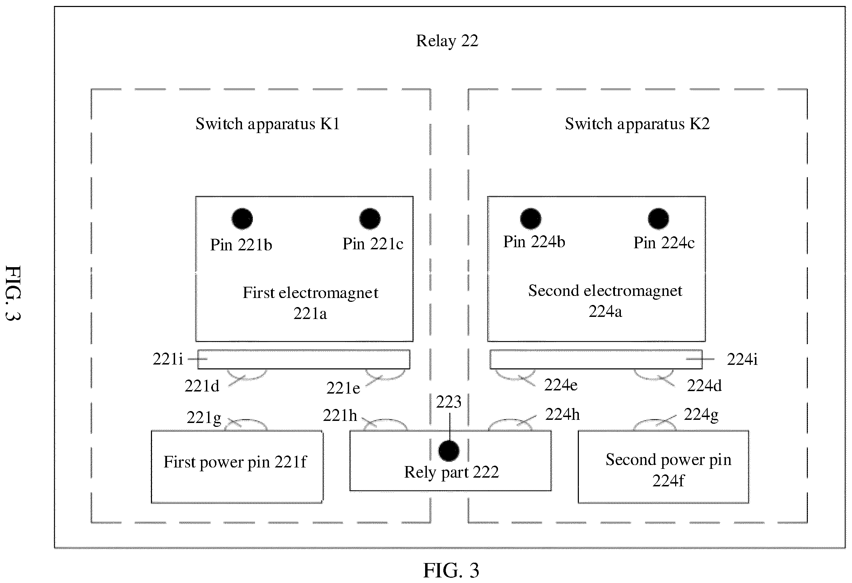

As shown in FIG. 3, the relay 22 may include a switch apparatus K1, a relay part 222, and a switch apparatus K2. For differentiation, the switch apparatus K1 may be referred to as a first switch apparatus, and the switch apparatus K2 may be referred to as a second switch apparatus.

As shown in FIG. 3, the switch apparatus K1 may include a first electromagnet 221a, a first armature 221i, a first moving contact 221d, a first moving contact 221e, a first power pin 221f, a first static contact 221g, and a third static contact 221h.

With reference to FIG. 1 and FIG. 3, the controller 23 is electrically connected to both a pin 221b and a pin 221c of the first electromagnet 221a, and the controller 23 is configured to send a control signal to the pin 221b and the pin 221c. The control signal is used to control working of the first electromagnet 221a. When the converter 2 is started and/or there is no faulty, the controller 23 sends a control signal. The control signal is used to enable the first electromagnet 221a to generate a magnetic attraction force. The first armature 221i can move under driving of the magnetic attraction force. When the converter 2 is shut down and/or a faulty occurs, the controller 23 sends a control signal. The control signal is used to enable the first electromagnet 221a to be powered off without generating a magnetic attraction force. After the magnetic attraction force disappears, the first armature 221i can be recovered to a default position. For example, the first armature 221i is recovered to the default position by using an elastic recovery force of a spring. The fault includes but is not limited to: overvoltage or undervoltage of the grid, overfrequency or underfrequency of the grid, overcurrent of the converter. power outage of the grid, or the like. Specific structures of the first electromagnet 221a and the first armature 221i are not limited in this embodiment.

As shown in FIG. 3, both the first moving contact 221d and the first moving contact 221e may be fastened to the first armature 221i. The first moving contact 221d and the first moving contact 221e may be spaced apart and both electrically connected to the first armature 221i (the first moving contact 221d and the first moving contact 221e are connected in series). Specific structures of the first moving contact 221d and the first moving contact 221e are not limited in this embodiment.

In this embodiment, the first power pin 221f may be electrically connected to the conversion circuit 21. A size of the first power pin 221f is relatively large, so that the first power pin 221f has a large-current (for example, up to 250 A) flow capability. The first power pin 221f emits heat during working. Therefore, the relatively large size also facilitates heat dissipation.

As shown in FIG. 3, the first static contact 221g may be fastened to the first power pin 221f and electrically connected to the first power pin 221f. A specific structure of the first static contact 221g is not limited in this embodiment.

As shown in FIG. 3, the third static contact 221h may be fastened to the relay part 222 and electrically connected to the relay part 222. The third static contact 221h and the first static contact 221g are spaced apart (The term "spaced apart" means that a clearance exists, and the clearance is used to meet a safety requirement of an electrical clearance. The description is also applicable to the following). A specific structure of the third static contact 221h is not limited in this embodiment.

As shown in FIG. 3, a structure of the switch apparatus K2 may be consistent with the structure of the switch apparatus K1. The switch apparatus K2 may include a second electromagnet 224a, a second armature 224i, a second moving contact 224d, a second moving contact 224e, a second power pin 224f, a second static contact 224g, and a fourth static contact 224h.

As shown in FIG. 1 and FIG. 3, the controller 23 is electrically connected to both a pin 224b and a pin 224c of the second electromagnet 224a, and the controller 23 is configured to send a control signal to the pin 224b and the pin 224c. The control signal is used to control working of the second electromagnet 224a. When the converter 2 is started and/or there is no faulty, the controller 23 sends a control signal. The control signal is used to enable the second electromagnet 224a to generate a magnetic attraction force. The second armature 224i can move under driving of the magnetic attraction force. When the converter 2 is shut down and/or a faulty occurs, the controller 23 sends a control signal. The control signal is used to enable the second electromagnet 224a to be powered off without generating a magnetic attraction force. After the magnetic attraction force disappears, the second armature 224i can be recovered to a default position. For example, the second armature 221i is recovered to the default position by using an elastic recovery force of a spring. The fault includes but is not limited to: overvoltage or undervoltage of the grid, overfrequency or underfrequency of the grid, overcurrent of the converter, power outage of the grid, or the like. Specific structures of the second electromagnet 224a and the second armature 224i are not limited in this embodiment.

In this embodiment, the control signal for controlling the second electromagnet 224a to generate the magnetic attraction force and the control signal for controlling the first electromagnet 221a to generate the magnetic attraction force are two independent signals, in other words, the second armature 224i and the first armature 221i may be independently and separately driven.

As shown in FIG. 3, both the second moving contact 224d and the second moving contact 224e may be fastened to the second armature 224i. The second moving contact 224d and the second moving contact 224e may be spaced apart and both electrically connected to the second armature 224i (the second moving contact 224d and the second moving contact 224e are connected in series). Specific structures of the second moving contact 224d and the second moving contact 224e are not limited in this embodiment.

In this embodiment, the second power pin 224f may be electrically connected to the grid/load. A size of the second power pin 224f is relatively large, so that the first power pin 221f has a large-current (for example, up to 250 A) flow capability. The second power pin 224f emits heat during working. Therefore, the relatively large size also facilitates heat dissipation.

As shown in FIG. 3, the second static contact 224g may be fastened to the second power pin 224f and electrically connected to the second power pin 224f. A specific structure of the second static contact 224g is not limited in this embodiment.

As shown in FIG. 3, the fourth static contact 224h may be fastened to the relay part 222 and electrically connected to the relay part 222. The fourth static contact 224h and the second static contact 224g may be spaced apart, and the fourth static contact 224h and the third static contact 221h may be spaced apart. A specific structure of the fourth static contact 224h is not limited in this embodiment.

As shown in FIG. 3, the relay part 222 is located between the first power pin 221f and the second power pin 224f, and the relay part 222 may be spaced apart from both the first power pin 221f and the second power pin 224f. The relay part 222 may be fastened in the relay 22, and the relay part 222 is a rigid part that is not prone to deform. The relay part 222 may be made of a material (for example, a metal material such as copper or copper alloy) with good electrical conductivity, and can transmit a large current. The relay part 222 may have a relatively simple structure, for example, a sheet-like structure. Compared with the power pin, the relay part 222 has a smaller size.

In Embodiment 1, the relay part 222 may be hidden inside the relay 22 without being exposed. In another embodiment, the relay part 222 may alternatively extend from the inside of the relay 22.

As shown in FIG. 3, the first moving contact 221d is not in contact with the first static contact 221g, and the first moving contact 221e is not in contact with the third static contact 221h. Therefore, the switch apparatus K1 is in an off state. The second moving contact 224d is not in contact with the second static contact 224g, and the second moving contact 224e is not in contact with the fourth static contact 224h. Therefore, the switch apparatus K2 is in an off state. Therefore, the first power pin 221f is disconnected from the second power pin 224f, and the relay 22 breaks a working circuit of the power system 1, so that the power system 1 is reliably isolated from the grid/load.

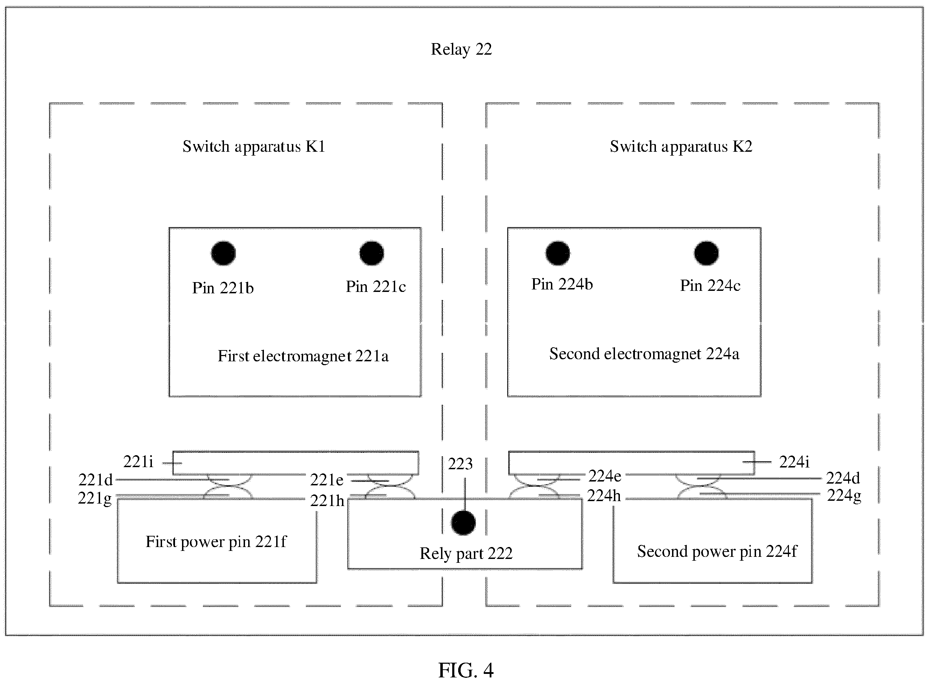

As shown in FIG. 4, for the switch apparatus K1, when a control signal of the controller 23 is loaded by using the pin 221b and the pin 221c, the first electromagnet 221a generates a magnetic attraction force, and the magnetic attraction force drives the first armature 221i to move and enables the first moving contact 221d to be in contact with the first static contact 221g and the first moving contact 221e to be in contact with the third static contact 221h, so that the switch apparatus K1 is turned on. For the switch apparatus K2, when a control signal of the controller 23 is loaded by using the pin 224b and the pin 224c, the second electromagnet 224a generates a magnetic attraction force, and the magnetic attraction force drives the second armature 224i to move and enables the second moving contact 224d to be in contact with the second static contact 224g and the second moving contact 224e to be in contact with the fourth static contact 224h, so that the switch apparatus K2 is turned on. Therefore, the first power pin 221f is connected to the second power pin 224f.

With reference to FIG. 1 and FIG. 4, after the first power pin 221f is connected to the second power pin 224f, a current can flow on a loop including the power supply/battery, the conversion circuit 21, the first power pin 221f, the first static contact 221g, the first moving contact 221d, the first armature 221i, the first moving contact 221e, the third static contact 221h, the relay part 222, the fourth static contact 224h, the second moving contact 224e, the second armature 224i, the second moving contact 224d, the second static contact 224g, the second power pin 224f, and the grid/load, to implement electric energy transmission.

To describe advantages of the solution in Embodiment 1 through comparison, the following first describes an existing product solution.

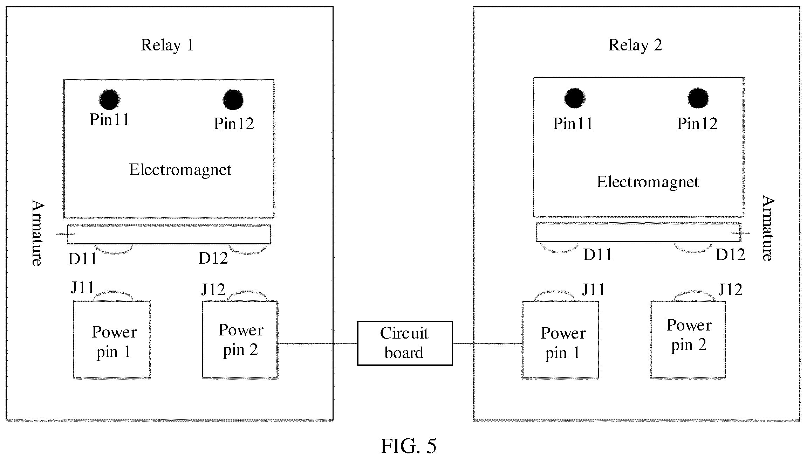

As shown in FIG. 5, each phase of a conventional converter includes two relays connected in series by using a circuit board. A relay 1 and a relay 2 each include a power pin 1 and a power pin 2, and a power pin 2 of the relay 1 is electrically connected to a power pin 1 of the relay 2 by using the circuit board. A static contact J11 is fastened to the power pin 1, and a static contact J12 is fastened to the power pin 2. In addition, a moving contact D11 and a moving contact D12 are fastened to an armature of each of the relay 1 and the relay 2.

The two relays in FIG. 5 are used as two switches and may be separately and independently controlled. Referring to FIG. 5, when a control signal is loaded by using a pin Pin11 and a pin Pin12 of the relay 1, an electromagnet generates a magnetic attraction force, and the magnetic attraction force drives an armature to move and enables a moving contact D11 to be in contact with a static contact J11 and a moving contact D12 to be in contact with a static contact J12, so that a power pin 1 and the power pin 2 of the relay 1 are connected, and the relay 1 is attracted. Similarly, when a control signal is loaded by using a pin Pin11 and a pin Pin12 of the relay 2, the power pin 1 and a power pin 2 of the relay 2 are connected, and the relay 2 is attracted. After both the relay 1 and the relay 2 are attracted, a current can flow on the four power pins and the circuit board, to implement electric energy transmission.

As shown in FIG. 5, each phase of a conventional converter includes two relays, each relay has two power pins, and each phase has four power pins in total. For a three-phase three-wire system, six relays (two relays are needed for each phase wire) and 12 power pins are needed. For a single-phase system, four relays (two relays are needed for each of a live wire and a zero wire) and eight power pins are needed. Because of a relatively large quantity of power pins and a relatively large quantity of relays, costs and a size of the converter are greatly increased. Because of the relatively large quantity of power pins, a contact loss is increased, and an amount of emitted heat is also relatively large. Because the two relays need to be connected in series by using a circuit board, an occupied area of a circuit layout is increased and costs are also increased (the circuit board has relatively high costs).

It can be learned, by comparing FIG. 4 and FIG. 5, that, each phase of the converter in Embodiment 1 includes only one composite relay 22, and has two power pins. For a three-phase three-wire system, only three relays (one relay 22 is disposed on each phase wire) and six power pins are needed. For a single-phase system, only two relays 22 (one relay 22 is designed for each of a live wire and a zero wire) and four power pins are needed. It can be learned that because a quantity of power pins and a quantity of relays are greatly reduced, costs and a size of the converter can be reduced. In addition, because the quantity of power pins is reduced, a contact loss and emitted heat can be reduced. In addition, the two switch apparatuses are connected in series by using the relay part 222 with the relatively simple structure, so that an occupied area of a circuit layout is reduced and costs are also reduced (the relay part 222 has relatively low costs).

In addition, as shown in FIG. 4, the relay 22 may further include a sampling pin 223 connected to the relay part 222 through fastening, and the sampling pin 223 may extend to the outside of the relay 22. The sampling pin 223 is electrically connected to the relay part 222, and the sampling pin 223 is configured to lead out an intermediate potential signal between the first power pin 221f and the second power pin 224f (also referred to as an intermediate potential signal between the switch apparatus K1 and the switch apparatus K2). The intermediate potential signal is detected, so that working statuses of the switch apparatus K1 and the switch apparatus K2 can be obtained. In another embodiment, the sampling pin 223 may not be disposed.

In Embodiment 1, any contact (for example, the first static contact 221g, the second static contact 224g, the third static contact 221h, the fourth static contact 224h, the first moving contact 221d, the first moving contact 221e, the second moving contact 224e, or the second moving contact 224e) in the foregoing may have a single contact head or a plurality of contact heads. The contact head is a part that is in the contact and that is configured to implement contact, for example, the top of an arc-shaped surface shown in FIG. 4. The single contact head indicates that the contact has one contact head. The plurality of contact heads indicate that the contact has at least two contact heads. These contact heads may be spaced apart from each other, and these contact heads are connected in parallel in a circuit. A contact having a plurality of contact heads may have, for example, a similar appearance of a plurality of hills distributed in a continuous manner. Contact heads in the static contact may be in contact with contact heads in the moving contact in a one-to-one correspondence. The multi-contact-head design helps increase contact strength, to help ensure reliability of an electrical connection.

### Embodiment 2

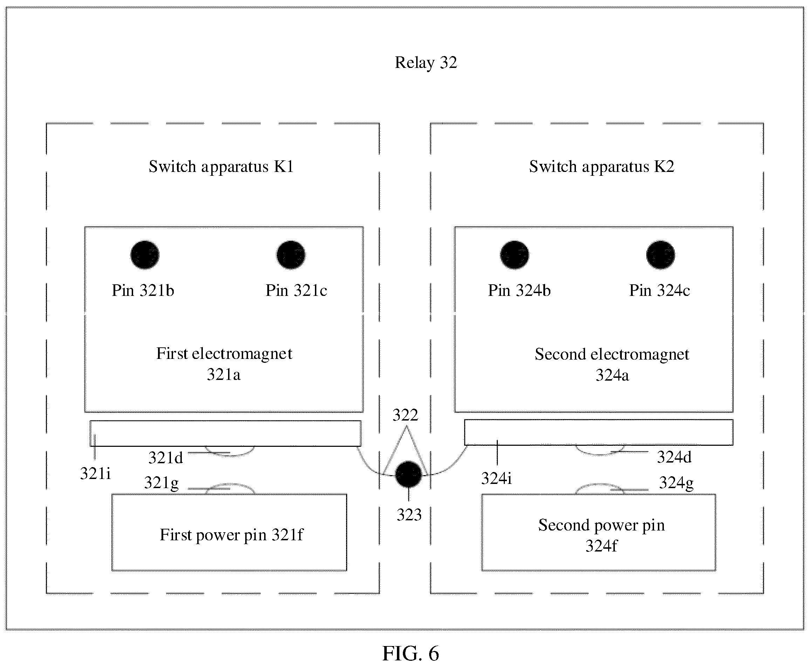

FIG. 6 shows a framework structure of a relay 32 according to Embodiment 2.

As shown in FIG. 6, the same as the relay 22 in Embodiment 1, the relay 32 includes a switch apparatus K1 and a switch apparatus K2 that are connected in series. The switch apparatus K1 may include a first electromagnet 321a. The first electromagnet 321a has a pin 321b and a pin 321c. The pin 321b and the pin 321c are configured to transmit a control signal of a controller. The control signal is used to enable the first electromagnet 321a to generate a magnetic attraction force, and the magnetic attraction force is used to drive a first armature 321i to move. The switch apparatus K1 may further include a first power pin 321f, and a first static contact 321g is fastened to the first power pin 321f. The switch apparatus K2 may include a second electromagnet 324a. The second electromagnet 324a has a pin 324b and a pin 324c. The pin 324b and the pin 324c are configured to transmit a control signal of the controller. The control signal is used to enable the second electromagnet 324a to generate a magnetic attraction force, and the magnetic attraction force is used to drive a second armature 324i to move. The switch apparatus K2 may further include a second power pin 324f, and a second static contact 324g is fastened to the second power pin 324f.

As shown in FIG. 6, different from the relay 22 in Embodiment 1, one first moving contact 321d is fastened to the first armature 321i of the relay 32, and the first moving contact 321d is configured to be in contact with the first static contact 321g. One second moving contact 324d is fastened to the second armature 324i of the relay 32, and the second moving contact 324d is configured to be in contact with the second static contact 324g. In addition, a relay part 322 of the relay 32 is a deformable part that is soft and prone to deform rather than a rigid part, for example, may be a soft wire (for example, a soft connection wire such as a copper wire). The relay part 322 connects the first armature 321i and the second armature 324i and is electrically connected to both the first armature 321i and the second armature 324i. The relay part 322 may also be electrically connected to a sampling pin 323, and the sampling pin 323 may be fastened in the relay 32. In addition, no third static contact or fourth static contact is disposed on the relay part 322.

FIG. 6 shows that the first moving contact 321d is not in contact with the first static contact 321g, and the switch apparatus K1 is in an off state; and the second moving contact 324d is not in contact with the second static contact 324g, and the switch apparatus K2 is in an off state. Therefore, the first power pin 321f is disconnected from the second power pin 324f, and the relay 32 breaks a working circuit of a power system, so that the power system is reliably isolated from a grid/load.

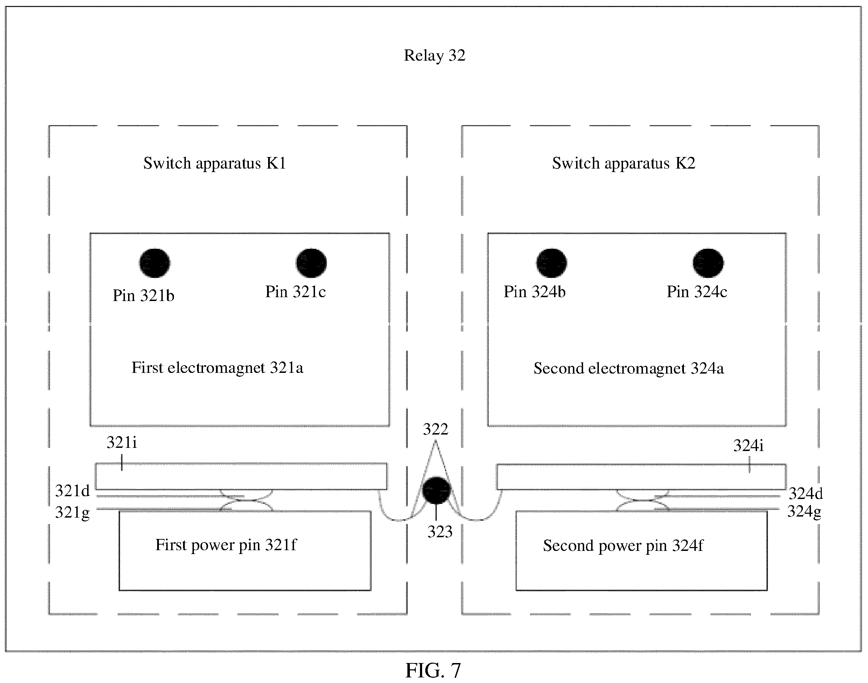

Referring to FIG. 7, in a process in which the switch apparatus K1 and the switch apparatus K2 are turned on, both the first armature 321i and the second armature 324i can drive the relay part 322 to move, and the relay part 322 deforms in a movement process. After both the switch apparatus K1 and the switch apparatus K2 are turned on, the first power pin 321f is connected to the second power pin 324f. Therefore, a current can flow in the first power pin 321f, the first static contact 321g, the first moving contact 321d, the first armature 321i, the relay part 322, the second armature 324i, the second moving contact 324d, the second static contact 324g, and the second power pin 324f, to help implement electric energy transmission.

The relay 32 in Embodiment 2 also has advantages of the relay 22 in Embodiment 1. In addition, compared with the relay 22 in Embodiment 1, in the relay 32 in Embodiment 2, the soft and deformable relay part 322 is designed, so that the relay part 322 is connected to the first armature 321i and the second armature 324i, and two static contacts and two moving contacts can be saved. Therefore, a contact loss can be further reduced.

The same as that in Embodiment 1, any contact in Embodiment 2 may have a single contact head or a plurality of contact heads.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A converter comprising a controller (23), a conversion circuit (21), and a relay (22, 32), wherein the controller (23) is electrically connected to both the conversion circuit (21) and the relay (22, 32);
the relay (22, 32) comprises a first switch apparatus, a relay **part** (222, 322), and a second switch apparatus;
the first switch apparatus comprises a first static contact (221g, 321g), a first electromagnet (221a, 321a), and a first moving contact (221d, 221e, 321d), and the second switch apparatus comprises a second static contact (224g, 324g), a second electromagnet (224a, 324a), and a second moving contact (224d, 224e, 324d);
when both the first switch apparatus and the second switch apparatus are turned on, the relay part (222, 322) is electrically connected to both the first moving contact (221d, 221e, 321d) and the second moving contact (224d, 224e, 324d);
the first switch apparatus further comprises a first power pin (221f, 321f), the first power pin (221f, 321f) is connected to the first static contact (221g, 321g) through fastening, and the first power pin (221f, 321f) is electrically connected to the conversion circuit (21); and the second switch apparatus further comprises a second power pin (224f, 324f), and the second power pin (224f, 324f) is connected to the second static contact (224g, 324g) through fastening;
wherein the relay part (222, 322) is a rigid part disposed through fastening between and spaced away from both the first power pin (221f, 321f) and the second power pin (224f, 324f), wherein the relay part (222, 322) is a sheet-like structure;
the first switch apparatus comprises a third static contact (221h), and the third static contact (221h) is fastened to the relay part (222, 322); and the second switch apparatus comprises a fourth static contact (224h), and the fourth static contact (224h) is fastened to the relay part (222, 322);
the first switch apparatus comprises two first moving contacts (221d, 221e, 321d), and the two first moving contacts (221d, 221e, 321d) are electrically connected; and the second switch apparatus comprises two second moving contacts (224d, 224e, 324d), and the two second moving contacts (224d, 224e, 324d) are electrically connected;
and
when both the first switch apparatus and the second switch apparatus are turned on, the relay part (222, 322) is electrically connected to the two first moving contacts (221d, 221e, 321d) and the two second moving contacts (224d, 224e, 324d); **characterized in that**
the controller (23) is configured to send a control signal to a first pair of pins (221b, 221c) of the first electromagnet (221a) to control the first electromagnet (221a, 321a) to generate magnetic attraction for the first moving contact (221d, 221e, 321d), to drive the first moving contact (221d, 221e, 321d) to be in contact with the first static contact (221g, 321g), so that the first switch apparatus is turned on; and
the controller (23) is further configured to send a control signal to a second pair of pins (224b, 224c) of the second electromagnet (224a) to control the second electromagnet (224a, 324a) to generate magnetic attraction for the second moving contact (224d, 224e, 324d), to drive the second moving contact (224d, 224e, 324d) to be in contact with the second static contact (224g, 324g), so that the second switch apparatus is turned on;
the controller (23) is further configured to: when a fault occurs or the converter is shut down, send a control signal to the first electromagnet (221a, 321a) to control the first electromagnet (221a, 321a) to be powered off and not to generate the magnetic attraction for the first moving contact (221d, 221e, 321d) to separate the first moving contact (221d, 221e, 321d) from the first static contact (221g, 321g) back to a default position, and send a control signal to the second electromagnet (224a, 324a) to control the second electromagnet (224a, 324a) to be powered off and not to generate the magnetic attraction for the second moving contact (224d, 224e, 324d) to separate the second moving contact (224d, 224e, 324d) from the second static contact (224g, 324g) back to a default position, so that both the first switch apparatus and the second switch apparatus are turned off;
the controller (23) is configured to control the first electromagnet (221a, 321a) to generate magnetic attraction for the two first moving contacts (221d, 221e, 321d), to drive the two first moving contacts (221d, 221e, 321d) to be respectively in contact with the first static contact (221g, 321g) and the third static contact (221h), so that the first switch apparatus is turned on; and the controller (23) is further configured to control the second electromagnet (224a, 324a) to generate magnetic attraction for the two second moving contacts (224d, 224e, 324d), to drive the two second moving contacts (224d, 224e, 324d) to be respectively in contact with the second static contact (224g, 324g) and the fourth static contact (224h), so that the second switch apparatus is turned on; and
the controller (23) is configured to: when a fault occurs, control the first electromagnet (221a, 321a) not to magnetically attract the two first moving contacts (221d, 221e, 321d) to respectively separate the two first moving contacts (221d, 221e, 321d) from the first static contact (221g, 321g) and the third static contact (221h), and control the second electromagnet (224a, 324a) not to magnetically attract the two second moving contacts (224d, 224e, 324d) to respectively separate the two second moving contacts (224d, 224e, 324d) from the second static contact (224g, 324g) and the fourth static contact (224h), so that both the first switch apparatus and the second switch apparatus are turned off.

2. The converter according to claim 1, wherein
the relay part (222, 322) comprises a metal piece, and both the third static contact (221h) and the fourth static contact (224h) are fastened to the metal piece.

3. The converter according to any one of claim 1 or 2, wherein
the relay (22, 32) comprises a sampling **pin** (223, 323), the sampling pin (223, 323) is fastened to the relay part (222, 322), and the sampling pin (223, 323) is configured to lead out an intermediate potential signal between the first switch apparatus and the second switch apparatus.

4. A relay (22, 32) comprising a first switch apparatus, a relay part (222, 322), and a second switch apparatus;
the first switch apparatus comprises a first static contact (221g, 321g), a first power pin (221f, 321f), a first electromagnet (221a, 321a), and a first moving contact (221d, 221e, 321d); the first static contact (221g, 321g) is connected to the first power pin (221f, 321f) through fastening;
the second switch apparatus comprises a second static contact (224g, 324g), a second power pin (224f, 324f), a second electromagnet (224a, 324a), and a second moving contact (224d, 224e, 324d); the second static contact (224g, 324g) is connected to the second power pin (224f, 324f) through fastening; and
when both the first switch apparatus and the second switch apparatus are turned on, the relay part (222, 322) is electrically connected to both the first moving contact (221d, 221e, 321d) and the second moving contact (224d, 224e, 324d);
wherein the relay part (222, 322) is a rigid part disposed through fastening between and spaced away from both the first power pin (221f, 321f) and the second power **pin** (224f, 324f), wherein the relay part (222, 322) is a sheet-like structure;
the first switch apparatus comprises a third static contact (221h), and the third static contact (221h) is fastened to the relay part (222, 322); and the second switch apparatus comprises a fourth static contact (224h), and the fourth static contact (224h) is fastened to the relay **part** (222, 322);
the first switch apparatus comprises two first moving contacts (221d, 221e, 321d), and the two first moving contacts (221d, 221e, 321d) are electrically connected;
the second switch apparatus comprises two second moving contacts (224d, 224e, 324d), and the two second moving contacts (224d, 224e, 324d) are electrically connected; and
when both the first switch apparatus and the second switch apparatus are turned on, the relay part (222, 322) is electrically connected to the two first moving contacts (221d, 221e, 321d) and the two second moving contacts (224d, 224e, 324d);
**characterized in that** the first electromagnet (221a, 321a) is configured to generate magnetic attraction for the first moving contact (221d, 221e, 321d), to drive the first moving contact (221d, 221e, 321d) to be in contact with the first static contact (221g, 321g), so that the first switch apparatus is turned on; and the first electromagnet (221a, 321a) is configured to stop generating the magnetic attraction for the first moving contact (221d, 221e, 321d) to separate the first moving contact (221d, 221e, 321d) from the first static contact (221g, 321g) after the magnetic attraction disappears back to a default position, so that the first switch apparatus is turned off;
the second electromagnet (224a, 324a) is configured to generate magnetic attraction for the second moving contact (224d, 224e, 324d), to drive the second moving contact (224d, 224e, 324d) to be in contact with the second static contact (224g, 324g), so that the second switch apparatus is turned on; and the second electromagnet (224a, 324a) is configured to stop generating the magnetic attraction for the second moving contact (224d, 224e, 324d) to separate the second moving contact (224d, 224e, 324d) from the second static contact (224g, 324g) after the magnetic attraction disappears back a default position, so that the second switch apparatus is turned off;
the first electromagnet (221a, 321a) is configured to generate magnetic attraction for the two first moving contacts (221d, 221e, 321d), to drive the two first moving contacts (221d, 221e, 321d) to be respectively in contact with the first static contact (221g, 321g) and the third static contact (221h), so that the first switch apparatus is turned on; and the two first moving contacts (221d, 221e, 321d) can be respectively separated from the first static contact (221g, 321g) and the third static contact (221h) after the magnetic attraction disappears, so that the first switch apparatus is turned off; and
the second electromagnet (224a, 324a) is configured to generate magnetic attraction for the two second moving contacts (224d, 224e, 324d), to drive the two second moving contacts (224d, 224e, 324d) to be respectively in contact with the second static contact (224g, 324g) and the fourth static contact (224h), so that the first switch apparatus is turned on; and the two second moving contacts (224d, 224e, 324d) can be respectively separated from the second static contact (224g, 324g) and the fourth static contact (224h) after the magnetic attraction disappears, so that the second switch apparatus is turned off.

5. The relay (22, 32) according to claim 4, wherein
the relay part (222, 322) comprises a metal piece, and both the third static contact (221h) and the fourth static contact (224h) are fastened to the metal piece.

6. The relay (22, 32) according to any one of claim 4 or 5, wherein
the relay (22, 32) comprises a sampling **pin** (223, 323), the sampling pin (223, 323) is fastened to the relay part (222, 322), and the sampling pin (223, 323) is configured to lead out an intermediate potential signal between the first switch apparatus and the second switch apparatus.

## Patentansprüche

1. Wandler, umfassend eine Steuerung (23), eine Umwandlungsschaltung (21) und ein Relais (22, 32), wobei die Steuerung (23) sowohl mit der Umwandlungsschaltung (21) als auch mit dem Relais (22, 32) elektrisch verbunden ist;
das Relais (22, 32) eine erste Schaltvorrichtung, einen Relaisteil (222, 322) und eine zweite Schaltvorrichtung umfasst; die erste Schaltvorrichtung einen ersten statischen Kontakt (221g, 321g), einen ersten Elektromagneten (221a, 321a) und einen ersten beweglichen Kontakt (221d, 221e, 321d) umfasst und die zweite Schaltvorrichtung einen zweiten statischen Kontakt (224g, 324g), einen zweiten Elektromagneten (224a, 324a) und einen zweiten beweglichen Kontakt (224d, 224e, 324d) umfasst; wenn sowohl die erste Schaltvorrichtung als auch die zweite Schaltvorrichtung aktiviert sind, der Relaisteil (222, 322) sowohl mit dem ersten beweglichen Kontakt (221d, 221e, 321d) als auch mit dem zweiten beweglichen Kontakt (224d, 224e, 324d) elektrisch verbunden ist;
die erste Schaltvorrichtung ferner einen ersten Stromanschluss (221f, 321f) umfasst, der erste Stromanschluss (221f, 321f) mit dem ersten statischen Kontakt (221g, 321g) mittels Befestigung verbunden ist und der erste Stromanschluss (221f, 321f) mit dem Umwandlungskreis (21) elektrisch verbunden ist; und die zweite Schaltvorrichtung ferner einen zweiten Stromanschluss (224f, 324f) umfasst und der zweite Stromanschluss (224f, 324f) mit dem zweiten statischen Kontakt (224g, 324g) mittels Befestigung verbunden ist;
wobei der Relaisteil (222, 322) ein starrer Teil ist, der mittels Befestigung zwischen und beabstandet von sowohl dem ersten Stromanschluss (221f, 321f) als auch dem zweiten Stromanschluss (224f, 324f) angeordnet ist, wobei der Relaisteil (222, 322) eine blattartige Struktur ist;
die erste Schaltvorrichtung einen dritten statischen Kontakt (221h) umfasst und der dritte statische Kontakt (221h) an dem Relaisteil (222, 322) befestigt ist; und die zweite Schaltvorrichtung einen vierten statischen Kontakt (224h) umfasst und der vierte statische Kontakt (224h) an dem Relaisteil (222, 322) befestigt ist;
die erste Schaltvorrichtung zwei erste bewegliche Kontakte (221d, 221e, 321d) umfasst und die zwei ersten beweglichen Kontakte (221d, 221e, 321d) elektrisch verbunden sind; und die zweite Schaltvorrichtung zwei zweite bewegliche Kontakte (224d, 224e, 324d) umfasst und die zwei zweiten beweglichen Kontakte (224d, 224e, 324d) elektrisch verbunden sind; und
wenn sowohl die erste Schaltvorrichtung als auch die zweite Schaltvorrichtung aktiviert sind, der Relaisteil (222, 322) mit den zwei ersten beweglichen Kontakten (221d, 221e, 321d) und den zwei zweiten beweglichen Kontakten (224d, 224e, 324d) elektrisch verbunden ist; **dadurch gekennzeichnet, dass**
die Steuerung (23) dazu konfiguriert ist, ein Steuersignal an ein erstes Anschlusspaar (221b, 221c) des ersten Elektromagneten (221a) zu senden, um den ersten Elektromagneten (221a, 321a) so zu steuern, dass er eine magnetische Anziehung für den ersten beweglichen Kontakt (221d, 221e, 321d) erzeugt, um den ersten beweglichen Kontakt (221d, 221e, 321d) anzusteuern, damit er mit dem ersten statischen Kontakt (221g, 321g) in Kontakt ist, sodass die erste Schaltvorrichtung aktiviert wird; und die Steuerung (23) ferner dazu konfiguriert ist, ein Steuersignal an ein zweites Anschlusspaar (224b, 224c) des zweiten Elektromagneten (224a) zu senden, um den zweiten Elektromagneten (224a, 324a) so zu steuern, dass er eine magnetische Anziehung für den zweiten beweglichen Kontakt (224d, 224e, 324d) erzeugt, um den zweiten beweglichen Kontakt (224d, 224e, 324d) anzusteuern, damit er mit dem zweiten statischen Kontakt (224g, 324g) in Kontakt ist, sodass die zweite Schaltvorrichtung aktiviert wird;
die Steuerung (23) ferner zu Folgendem konfiguriert ist: wenn ein Fehler auftritt oder der Wandler abgeschaltet wird, Senden eines Steuersignals an den ersten Elektromagneten (221a, 321a), um den ersten Elektromagneten (221a, 321a) so zu steuern, dass er ausgeschaltet wird und dass er nicht die magnetische Anziehung für den ersten beweglichen Kontakt (221d, 221e, 321d) erzeugt, um den ersten beweglichen Kontakt (221d, 221e, 321d) von dem ersten statischen Kontakt (221g, 321g) durch Zurückführen in eine Ausgangsposition zu trennen, und Senden eines Steuersignals an den zweiten Elektromagneten (224a, 324a), um den zweiten Elektromagneten (224a, 324a) so zu steuern, dass er ausgeschaltet wird und dass er nicht die magnetische Anziehung für den zweiten beweglichen Kontakt (224d, 224e, 324d) erzeugt, um den zweiten beweglichen Kontakt (224d, 224e, 324d) von dem zweiten statischen Kontakt (224g, 324g) durch Zurückführen in eine Ausgangsposition zu trennen, sodass sowohl die erste Schaltvorrichtung als auch die zweite Schaltvorrichtung deaktiviert wird;
die Steuerung (23) dazu konfiguriert ist, den ersten Elektromagneten (221a, 321a) so zu steuern, dass er eine magnetische Anziehung für die zwei ersten beweglichen Kontakte (221d, 221e, 321d) erzeugt, um die zwei ersten beweglichen Kontakte (221d, 221e, 321d) anzusteuern, damit sie mit dem ersten statischen Kontakt (221g, 321g) bzw. dem dritten statischen Kontakt (221h) in Kontakt sind, sodass die erste Schaltvorrichtung aktiviert wird; und die Steuerung (23) ferner dazu konfiguriert ist, den zweiten Elektromagneten (224a, 324a) so zu steuern, dass er eine magnetische Anziehung für die zwei zweiten beweglichen Kontakte (224d, 224e, 324d) erzeugt, um die zwei zweiten beweglichen Kontakte (224d, 224e, 324d) anzusteuern, damit sie mit dem zweiten statischen Kontakt (224g, 324g) bzw. dem vierten statischen Kontakt (224h) in Kontakt sind, sodass die zweite Schaltvorrichtung aktiviert wird; und die Steuerung (23) zu Folgendem konfiguriert ist: wenn ein Fehler auftritt, Steuern des ersten Elektromagneten (221a, 321a) derart, dass er die zwei ersten beweglichen Kontakte (221d, 221e, 321d) nicht magnetisch anzieht, um die zwei ersten beweglichen Kontakte (221d, 221e, 321d) von dem ersten statischen Kontakt (221g, 321g) bzw. dem dritten statischen Kontakt (221h) zu trennen und Steuern des zweiten Elektromagneten (224a, 324a) derart, dass er die zwei zweiten beweglichen Kontakte (224d, 224e, 324d) nicht magnetisch anzieht, um die zwei zweiten beweglichen Kontakte (224d, 224e, 324d) von dem zweiten statischen Kontakt (224g, 324g) bzw. dem vierten statischen Kontakt (224h) zu trennen, sodass sowohl die erste Schaltvorrichtung als auch die zweite Schaltvorrichtung deaktiviert wird.

2. Wandler nach Anspruch 1, wobei
der Relaisteil (222, 322) ein Metallstück umfasst und sowohl der dritte statische Kontakt (221h) als auch der vierte statische Kontakt (224h) an dem Metallstück befestigt sind.

3. Wandler nach einem der Ansprüche 1 oder 2, wobei
das Relais (22, 32) einen Abtastanschluss (223, 323) umfasst, der Abtastanschluss (223, 323) an dem Relaisteil (222, 322) befestigt ist und der Abtastanschluss (223, 323) dazu konfiguriert ist, ein Zwischenpotentialsignal zwischen der ersten Schaltvorrichtung und der zweiten Schaltvorrichtung auszugeben.

4. Relais (22, 32), umfassend eine erste Schaltvorrichtung, einen Relaisteil (222, 322) und eine zweite Schaltvorrichtung; wobei
die erste Schaltvorrichtung einen ersten statischen Kontakt (221g, 321g), einen ersten Stromanschluss (221f, 321f), einen ersten Elektromagneten (221a, 321a) und einen ersten beweglichen Kontakt (221d, 221e, 321d) umfasst; der erste statische Kontakt (221g, 321g) mit dem ersten Stromanschluss (221f, 321f) mittels Befestigung verbunden ist;
die zweite Schaltvorrichtung einen zweiten statischen Kontakt (224g, 324g), einen zweiten Stromanschluss (224f, 324f), einen zweiten Elektromagneten (224a, 324a) und einen zweiten beweglichen Kontakt (224d, 224e, 324d) umfasst; der zweite statische Kontakt (224g, 324g) mit dem zweiten Stromanschluss (224f, 324f) mittels Befestigung verbunden ist; und,
wenn sowohl die erste Schaltvorrichtung als auch die zweite Schaltvorrichtung aktiviert sind, der Relaisteil (222, 322) sowohl mit dem ersten beweglichen Kontakt (221d, 221e, 321d) als auch mit dem zweiten beweglichen Kontakt (224d, 224e, 324d) elektrisch verbunden ist;
wobei der Relaisteil (222, 322) ein starrer Teil ist, der mittels Befestigung zwischen und beabstandet von sowohl dem ersten Stromanschluss (221f, 321f) als auch dem zweiten Stromanschluss (224f, 324f) angeordnet ist, wobei der Relaisteil (222, 322) eine blattartige Struktur ist;
die erste Schaltvorrichtung einen dritten statischen Kontakt (221h) umfasst und der dritte statische Kontakt (221h) an dem Relaisteil (222, 322) befestigt ist; und die zweite Schaltvorrichtung einen vierten statischen Kontakt (224h) umfasst und der vierte statische Kontakt (224h) an dem Relaisteil (222, 322) befestigt ist;
die erste Schaltvorrichtung zwei erste bewegliche Kontakte (221d, 221e, 321d) umfasst und die zwei ersten beweglichen Kontakte (221d, 221e, 321d) elektrisch verbunden sind;
die zweite Schaltvorrichtung zwei zweite bewegliche Kontakte (224d, 224e, 324d) umfasst und die zwei zweiten beweglichen Kontakte (224d, 224e, 324d) elektrisch verbunden sind; und, wenn sowohl die erste Schaltvorrichtung als auch die zweite Schaltvorrichtung aktiviert sind, der Relaisteil (222, 322) mit den zwei ersten beweglichen Kontakten (221d, 221e, 321d) und den zwei zweiten beweglichen Kontakten (224d, 224e, 324d) elektrisch verbunden ist;
**dadurch gekennzeichnet, dass** der erste Elektromagnet (221a, 321a) dazu konfiguriert ist, eine magnetische Anziehung für den ersten beweglichen Kontakt (221d, 221e, 321d) zu erzeugen, um den ersten beweglichen Kontakt (221d, 221e, 321d) anzusteuern, damit er mit dem ersten statischen Kontakt (221g, 321g) in Kontakt ist, sodass die erste Schaltvorrichtung aktiviert wird; und der erste Elektromagnet (221a, 321a) dazu konfiguriert ist, das Erzeugen der magnetischen Anziehung für den ersten beweglichen Kontakt (221d, 221e, 321d) zu beenden, um den ersten beweglichen Kontakt (221d, 221e, 321d) von dem ersten statischen Kontakt (221g, 321g) zurück in eine Ausgangsposition zu trennen, nachdem die magnetische Anziehung verschwunden ist, sodass die erste Schaltvorrichtung deaktiviert wird;
der zweite Elektromagnet (224a, 324a) dazu konfiguriert ist, eine magnetische Anziehung für den zweiten beweglichen Kontakt (224d, 224e, 324d) zu erzeugen, um den zweiten beweglichen Kontakt (224d, 224e, 324d) anzusteuern, damit er mit dem zweiten statischen Kontakt (224g, 324g) in Kontakt ist, sodass die zweite Schaltvorrichtung aktiviert wird; und der zweite Elektromagnet (224a, 324a) dazu konfiguriert ist, das Erzeugen der magnetischen Anziehung für den zweiten beweglichen Kontakt (224d, 224e, 324d) zu beenden, um den zweiten beweglichen Kontakt (224d, 224e, 324d) von dem zweiten statischen Kontakt (224g, 324g) zurück in eine Ausgangsposition zu trennen, nachdem die magnetische Anziehung verschwunden ist, sodass die zweite Schaltvorrichtung deaktiviert wird;
der erste Elektromagnet (221a, 321a) dazu konfiguriert ist, eine magnetische Anziehung für die zwei ersten beweglichen Kontakte (221d, 221e, 321d) zu erzeugen, um die zwei ersten beweglichen Kontakte (221d, 221e, 321d) anzusteuern, damit sie mit dem ersten statischen Kontakt (221g, 321g) bzw. dem dritten statischen Kontakt (221h) in Kontakt sind, sodass die erste Schaltvorrichtung aktiviert wird; und die zwei ersten beweglichen Kontakte (221d, 221e, 321d) von dem ersten statischen Kontakt (221g, 321g) bzw. dem dritten statischen Kontakt (221h) getrennt werden können, nachdem die magnetische Anziehung verschwunden ist, sodass die erste Schaltvorrichtung deaktiviert wird; und
der zweite Elektromagnet (224a, 324a) dazu konfiguriert ist, eine magnetische Anziehung für die zwei zweiten beweglichen Kontakte (224d, 224e, 324d) zu erzeugen, um die zwei zweiten beweglichen Kontakte (224d, 224e, 324d) anzusteuern, damit sie mit dem zweiten statischen Kontakt (224g, 324g) bzw. dem vierten statischen Kontakt (224h) in Kontakt sind, sodass die erste Schaltvorrichtung aktiviert wird; und die zwei zweiten beweglichen Kontakte (224d, 224e, 324d) von dem zweiten statischen Kontakt (224g, 324g) bzw. dem vierten statischen Kontakt (224h) getrennt werden können, nachdem die magnetische Anziehung verschwunden ist, sodass die zweite Schaltvorrichtung deaktiviert wird.

5. Relais (22, 32) nach Anspruch 4, wobei
der Relaisteil (222, 322) ein Metallstück umfasst und sowohl der dritte statische Kontakt (221h) als auch der vierte statische Kontakt (224h) an dem Metallstück befestigt sind.

6. Relais (22, 32) nach einem der Ansprüche 4 bis 5, wobei
das Relais (22, 32) einen Abtastanschluss (223, 323) umfasst, der Abtastanschluss (223, 323) an dem Relaisteil (222, 322) befestigt ist und der Abtastanschluss (223, 323) dazu konfiguriert ist, ein Zwischenpotentialsignal zwischen der ersten Schaltvorrichtung und der zweiten Schaltvorrichtung auszugeben.

## Revendications

1. Convertisseur comprenant un dispositif de commande (23), un circuit de conversion (21) et un relais (22, 32), dans lequel le dispositif de commande (23) est électriquement connecté à la fois au circuit de conversion (21) et au relais (22, 32) ;
le relais (22, 32) comprend un premier appareil de commutation, une partie relais (222, 322) et un second appareil de commutation ;
le premier appareil de commutation comprend un premier contact statique (221g, 321g), un premier électroaimant (221a, 321a) et un premier contact mobile (221d, 221e, 321d), et le second appareil de commutation comprend un deuxième contact statique (224g, 324g), un second électroaimant (224a, 324a) et un second contact mobile (224d, 224e, 324d) ;
lorsque le premier appareil de commutation et le second appareil de commutation sont tous deux activés, la partie relais (222, 322) est électriquement connectée à la fois au premier contact mobile (221d, 221e, 321d) et au second contact mobile (224d, 224e, 324d) ;
le premier appareil de commutation comprend également une première broche d'alimentation (221f, 321f), la première broche d'alimentation (221f, 321f) est connectée au premier contact statique (221g, 321g) par fixation, et la première broche d'alimentation (221f, 321f) est connectée électriquement au circuit de conversion (21) ; et le second appareil de commutation comprend également une seconde broche d'alimentation (224f, 324f), et la seconde broche d'alimentation (224f, 324f) est connectée au deuxième contact statique (224g, 324g) par fixation ;
dans lequel la partie relais (222, 322) est une partie rigide disposée par fixation entre et espacée de la première broche d'alimentation (221f, 321f) et de la seconde broche d'alimentation (224f, 324f), dans lequel la partie relais (222, 322) est une structure en forme de feuille ;
le premier appareil de commutation comprend un troisième contact statique (221h), et le troisième contact statique (221h) est fixé à la partie relais (222, 322) ; et le second appareil de commutation comprend un quatrième contact statique (224h), et le quatrième contact statique (224h) est fixé à la partie relais (222, 322) ;
le premier appareil de commutation comprend deux premiers contacts mobiles (221d, 221e, 321d), et les deux premiers contacts mobiles (221d, 221e, 321d) sont électriquement connectés ; et le second appareil de commutation comprend deux seconds contacts mobiles (224d, 224e, 324d), et les deux seconds contacts mobiles (224d, 224e, 324d) sont électriquement connectés ; et
lorsque le premier appareil de commutation et le second appareil de commutation sont tous deux activés, la partie relais (222, 322) est électriquement connectée aux deux premiers contacts mobiles (221d, 221e, 321d) et aux deux seconds contacts mobiles (224d, 224e, 324d) ; **caractérisé en ce que**
le dispositif de commande (23) est configuré pour envoyer un signal de commande à une première paire de broches (221b, 221c) du premier électroaimant (221a) pour commander le premier électroaimant (221a, 321a) afin de générer une attraction magnétique pour le premier contact mobile (221d, 221e, 321d), pour amener le premier contact mobile (221d, 221e, 321d) à être en contact avec le premier contact statique (221g, 321g), de sorte que le premier appareil de commutation soit activé ; et le dispositif de commande (23) est également configuré pour envoyer un signal de commande à une seconde paire de broches (224b, 224c) du second électroaimant (224a) pour commander le second électroaimant (224a, 324a) afin de générer une attraction magnétique pour le second contact mobile (224d, 224e, 324d), pour amener le second contact mobile (224d, 224e, 324d) à être en contact avec le deuxième contact statique (224g, 324g), de sorte que le second appareil de commutation soit activé ;
le dispositif de commande (23) est également configuré pour : lorsqu'un défaut survient ou que le convertisseur est arrêté, envoyer un signal de commande au premier électroaimant (221a, 321a) afin de commander le premier électroaimant (221a, 321a) pour qu'il soit mis hors tension et ne génère pas l'attraction magnétique pour le premier contact mobile (221d, 221e, 321d) pour séparer le premier contact mobile (221d, 221e, 321d) du premier contact statique (221g, 321g) pour revenir à une position par défaut, et envoyer un signal de commande au second électroaimant (224a, 324a) afin de commander le second électroaimant (224a, 324a) pour qu'il soit mis hors tension et ne génère pas l'attraction magnétique pour le second contact mobile (224d, 224e, 324d) pour séparer le second contact mobile (224d, 224e, 324d) du deuxième contact statique (224g, 324g) pour revenir à une position par défaut, de sorte que le premier appareil de commutation et le second appareil de commutation soient tous deux désactivés ;
le dispositif de commande (23) est configuré pour commander le premier électroaimant (221a, 321a) afin de générer une attraction magnétique pour les deux premiers contacts mobiles (221d, 221e, 321d), afin d'amener les deux premiers contacts mobiles (221d, 221e, 321d) à être respectivement en contact avec le premier contact statique (221g, 321g) et le troisième contact statique (221h), de sorte que le premier appareil de commutation soit activé ; et le dispositif de commande (23) est également configuré pour commander le second électroaimant (224a, 324a) afin de générer une attraction magnétique pour les deux seconds contacts mobiles (224d, 224e, 324d), afin d'amener les deux seconds contacts mobiles (224d, 224e, 324d) à être respectivement en contact avec le deuxième contact statique (224g, 324g) et le quatrième contact statique (224h), de sorte que le second appareil de commutation soit activé ; et
le dispositif de commande (23) est configuré pour : lorsqu'un défaut survient, commander le premier électroaimant (221a, 321a) afin qu'il n'attire pas magnétiquement les deux premiers contacts mobiles (221d, 221e, 321d) pour séparer respectivement les deux premiers contacts mobiles (221d, 221e, 321d) du premier contact statique (221g, 321g) et du troisième contact statique (221h), et commander le second électroaimant (224a, 324a) afin qu'il n'attire pas magnétiquement les deux seconds contacts mobiles (224d, 224e, 324d) pour séparer respectivement les deux seconds contacts mobiles (224d, 224e, 324d) du deuxième contact statique (224g, 324g) et du quatrième contact statique (224h), de sorte que le premier appareil de commutation et le second appareil de commutation soient tous deux désactivés.

2. Convertisseur selon la revendication 1, dans lequel
la partie relais (222, 322) comprend une pièce métallique, et le troisième contact statique (221h) et le quatrième contact statique (224h) sont tous deux fixés à la pièce métallique.

3. Convertisseur selon l'une quelconque des revendications 1 ou 2, dans lequel
le relais (22, 32) comprend une broche d'échantillonnage (223, 323), la broche d'échantillonnage (223, 323) est fixée à la partie relais (222, 322), et la broche d'échantillonnage (223, 323) est configurée pour conduire un signal de potentiel intermédiaire entre le premier appareil de commutation et le second appareil de commutation.

4. Relais (22, 32) comprenant un premier appareil de commutation, une partie relais (222, 322) et un second appareil de commutation ;
le premier appareil de commutation comprend un premier contact statique (221g, 321g), une première broche d'alimentation (221f, 321f), un premier électroaimant (221a, 321a) et un premier contact mobile (221d, 221e, 321d) ; le premier contact statique (221g, 321g) est connecté à la première broche d'alimentation (221f, 321f) par fixation ;
le second appareil de commutation comprend un deuxième contact statique (224g, 324g), une seconde broche d'alimentation (224f, 324f), un second électroaimant (224a, 324a) et un second contact mobile (224d, 224e, 324d) ; le deuxième contact statique (224g, 324g) est connecté à la seconde broche d'alimentation (224f, 324f) par fixation ; et
lorsque le premier appareil de commutation et le second appareil de commutation sont tous deux activés, la partie relais (222, 322) est électriquement connectée à la fois au premier contact mobile (221d, 221e, 321d) et au second contact mobile (224d, 224e, 324d) ;
dans lequel la partie relais (222, 322) est une partie rigide disposée par fixation entre et espacée de la première broche d'alimentation (221f, 321f) et de la seconde broche d'alimentation (224f, 324f), dans lequel la partie relais (222, 322) est une structure en forme de feuille ;
le premier appareil de commutation comprend un troisième contact statique (221h), et le troisième contact statique (221h) est fixé à la partie relais (222, 322) ; et le second appareil de commutation comprend un quatrième contact statique (224h), et le quatrième contact statique (224h) est fixé à la partie relais (222, 322) ;
le premier appareil de commutation comprend deux premiers contacts mobiles (221d, 221e, 321d), et les deux premiers contacts mobiles (221d, 221e, 321d) sont connectés électriquement ;
le second appareil de commutation comprend deux seconds contacts mobiles (224d, 224e, 324d), et les deux seconds contacts mobiles (224d, 224e, 324d) sont électriquement connectés ; et
lorsque le premier appareil de commutation et le second appareil de commutation sont tous deux activés, la partie relais (222, 322) est électriquement connectée aux deux premiers contacts mobiles (221d, 221e, 321d) et aux deux seconds contacts mobiles (224d, 224e, 324d) ;
**caractérisé en ce que** le premier électroaimant (221a, 321a) est configuré pour générer une attraction magnétique pour le premier contact mobile (221d, 221e, 321d), afin d'amener le premier contact mobile (221d, 221e, 321d) à être en contact avec le premier contact statique (221g, 321g), de sorte que le premier appareil de commutation soit activé ; et le premier électroaimant (221a, 321a) est configuré pour cesser de générer l'attraction magnétique pour le premier contact mobile (221d, 221e, 321d) afin de séparer le premier contact mobile (221d, 221e, 321d) du premier contact statique (221g, 321g) après que l'attraction magnétique a disparu pour revenir à une position par défaut, de sorte que le premier appareil de commutation soit désactivé ;
le second électroaimant (224a, 324a) est configuré pour générer une attraction magnétique pour le second contact mobile (224d, 224e, 324d), afin d'amener le second contact mobile (224d, 224e, 324d) à être en contact avec le deuxième contact statique (224g, 324g), de sorte que le second appareil de commutation soit activé ; et le second électroaimant (224a, 324a) est configuré pour cesser de générer l'attraction magnétique pour le second contact mobile (224d, 224e, 324d) afin de séparer le second contact mobile (224d, 224e, 324d) du deuxième contact statique (224g, 324g) après que l'attraction magnétique a disparu pour revenir à une position par défaut, de sorte que le second appareil de commutation soit désactivé ;
le premier électroaimant (221a, 321a) est configuré pour générer une attraction magnétique sur les deux premiers contacts mobiles (221d, 221e, 321d), afin d'amener les deux premiers contacts mobiles (221d, 221e, 321d) à être respectivement en contact avec le premier contact statique (221g, 321g) et le troisième contact statique (221h), de sorte que le premier appareil de commutation soit activé ; et les deux premiers contacts mobiles (221d, 221e, 321d) peuvent être séparés respectivement du premier contact statique (221g, 321g) et du troisième contact statique (221h) après la disparition de l'attraction magnétique, de sorte que le premier appareil de commutation soit désactivé ; et
le second électroaimant (224a, 324a) est configuré pour générer une attraction magnétique pour les deux seconds contacts mobiles (224d, 224e, 324d), afin d'amener les deux seconds contacts mobiles (224d, 224e, 324d) à être respectivement en contact avec le deuxième contact statique (224g, 324g) et le quatrième contact statique (224h), de sorte que le premier appareil de commutation soit activé ; et les deux seconds contacts mobiles (224d, 224e, 324d) peuvent être respectivement séparés du deuxième contact statique (224g, 324g) et du quatrième contact statique (224h) après la disparition de l'attraction magnétique, de sorte que le second appareil de commutation soit désactivé.

5. Relais (22, 32) selon la revendication 4, dans lequel
la partie relais (222, 322) comprend une pièce métallique, et le troisième contact statique (221h) et le quatrième contact statique (224h) sont tous deux fixés à la pièce métallique.

6. Relais (22, 32) selon l'une quelconque des revendications 4 ou 5, dans lequel
le relais (22, 32) comprend une broche d'échantillonnage (223, 323), la broche d'échantillonnage (223, 323) est fixée à la partie relais (222, 322), et la broche d'échantillonnage (223, 323) est configurée pour conduire un signal de potentiel intermédiaire entre le premier appareil de commutation et le second appareil de commutation.
